(19) Europäisches Patentamt
European Patent Office
Office européen des brevets

(11) **EP 4 305 541 B1**

(12) **EUROPEAN PATENT SPECIFICATION**

(45) Date of publication and mention
of the grant of the patent:
**28.05.2025 Bulletin 2025/22**

(21) Application number: **21724084.5**

(22) Date of filing: **14.04.2021**

(51) International Patent Classification (IPC):
**G06F 30/367** (2020.01) **G01R 31/3183** (2006.01)

(52) Cooperative Patent Classification (CPC):
**G01R 31/318364; G06F 30/367**

(86) International application number:
**PCT/US2021/027260**

(87) International publication number:
**WO 2022/220822 (20.10.2022 Gazette 2022/42)**

(54) **TEST GENERATION FOR STRUCTURALLY SIMILAR CIRCUITS**

TESTERZEUGUNG FÜR STRUKTURELL ÄHNLICHE SCHALTUNGEN

GÉNÉRATION DE TEST POUR CIRCUITS STRUCTURELLEMENT SIMILAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.01.2024 Bulletin 2024/03**

(73) Proprietor: **Siemens Industry Software Inc.**
**Plano, TX 75024-6612 (US)**

(72) Inventors:
• **MUKHERJEE, Nilanjan**
**Wilsonville, Oregon 97070 (US)**
• **RAJSKI, Janusz**
**West Linn, Oregon 97068 (US)**
• **JOE, Jerin**
**Wilsonville, Oregon 97070 (US)**
• **POMERANZ, Irith**
**Lafayette, Indiana 47907 (US)**

(74) Representative: **Horn Kleimann Waitzhofer**
**Schmid-Dreyer**
**Patent- und Rechtsanwälte PartG mbB**
**Theresienhöhe 12**
**80339 München (DE)**

(56) References cited:
**US-A- 5 617 431**

• XIAOKE QIN ET AL: "Efficient directed test generation for validation of multicore architectures", QUALITY ELECTRONIC DESIGN (ISQED), 2011 12TH INTERNATIONAL SYMPOSIUM ON, IEEE, 14 March 2011 (2011-03-14), pages 1 - 8, XP031869243, ISBN: 978-1-61284-913-3, DOI: 10.1109/ ISQED.2011.5770737
• SANG-HOON SONG ET AL: "Incremental test pattern generation", VLSI TEST SYMPOSIUM, 1993. DIGEST OF PAPERS., ELEVENTH ANNUAL 1993 IEE E ATLANTIC CITY, NJ, USA 6-8 APRIL 1993, LOS ALAMITOS, CA, USA,IEEE COMPUT. SOC, US, 6 April 1993 (1993-04-06), pages 244 - 250, XP032144890, ISBN: 978-0-8186-3830-5, DOI: 10.1109/VTEST.1993.313353
• LI W ET AL: "REDUCING THE COST OF TEST PATTERN GENERATION BY INFORMATION REUSING", PROCEEDINGS OF THE INTERNATIONAL CONFERENCE ON COMPUTER DESIGN: VLSI IN COMPUTERS AND PROCESSORS. CAMBRIDGE, MA., OCT. 3 - 6, 1993; [PROCEEDINGS OF THE INTERNATIONAL CONFERENCE ON COMPUTER DESIGN: VLSI IN COMPUTERS AND PROCESSORS], LOS ALAMITOS, IEEE, vol. -, 3 October 1993 (1993-10-03), pages 310 - 313, XP000463421

**Description**

FIELD OF THE DISCLOSED TECHNIQUES

The presently disclosed techniques relates to circuit testing. Various implementations of the disclosed techniques may be particularly useful for test pattern generation for circuits that exhibit extensive structural similarity.

BACKGROUND OF THE DISCLOSED TECHNIQUES

The digital revolution has led to a steep increase in the complexity and density of integrated circuits. For complex and dense integrated circuits, the time taken to test, debug and verify the circuit becomes the bottleneck for chip design. State-of-the-art design flows are iterative due to the need to fix bugs, and address performance and power constraints. During an iterative design flow, test generation is often performed repeatedly and early to identify testability bottlenecks that cannot be identified using approximations such as testability measures. At this early stage of the design process, the speed of test generation is essential to the fast convergence of the design process and the test set does not need to be optimized.

A large number of homogeneous cores can be seen in conventional, gaming, and graphical processors. Integrated circuits like CPUs, GPUs, and artificial intelligence chips show huge structural similarity between cores. Moreover, a new design that reuses the same cores shows significant structural similarity to a previous design. Further, netlists before and after place and route, and circuits subjected to engineering change order (ECO), or re-timing, also exhibit a large structural similarity. It will significantly reduce the runtime of analyzing the testability of a second circuit, which is structurally similar to a first circuit, if a test set for the second circuit can be obtained mainly by transforming the test set generated for the first circuit without repeating the entire test generation process.

The property of structural similarity between circuits, however, is not currently utilized in conventional test generation processes. Only a single version of a design was considered by an incremental test generation technique disclosed in Sang-Hoon Song and L. L. Kinney, "Incremental test pattern generation," Digest of Papers Eleventh Annual 1993 IEEE VLSI Test Symposium, Atlantic City, NJ, USA, 1993, pp. 244-250. The disclosed technique is based on an idea that starting from a test generated for one fault, it is possible to transform the current test pattern into a test pattern for another fault in the same design more quickly than starting from an allunspecified test pattern.

While the structural correspondence between two circuits is considered in A. Dutta, N. Tuttle and K. Anandh, "Canonical ordering of instances to immunize the FPGA place and route flow from ECO-induced variance," International Symposium on Quality Electronic Design (ISQED), Santa Clara, CA, 2013, pp. 359-363, the technique for determining structural similarity is not suitable for fast test pattern generation for some circuit designs such as those after an engineering change order. In the disclosed process, all gate instances are ordered. For the ordering, an integer value is calculated for each gate instance by a linear combination of the type of the gate, the number of fan-in gates, the number of fan-out gates, and the terminal node name of the gate instance. In addition, the terminal node names of the connected fan-in and fan-out gates are also used. The value assigned to a gate instance is defined as its signature. After assigning signature values to all gate instances, a forward traversal of the circuit design is performed from inputs to outputs to obtain updated signature values for the gate instances. This is achieved by linearly combining the signatures of the fan-in gates for each gate instance. The ordering of gate instances based on the computed signature values guarantees a minimal change in the gate instance order even if the ECO process changes the ordering of the gate instances. The forward traversal-only process cannot capture some structure differences and thus is not suitable for speeding up test pattern generation.

"Efficient directed test generation for validation of multicore architectures" by Xiaoke Qin et al. discloses that functional verification of multicore architectures is widely acknowledged as a major challenge. Directed tests are promising since a significantly smaller number of directed tests can achieve the same coverage goal compared to constrained-random tests. SAT-based bounded model checking is effective for automated generation of directed tests (counterexamples). While existing approaches focus on clause forwarding between different bounds to reduce the test generation time, this paper proposes a novel technique that exploits the structural similarity within the same bound as well as between different bounds. The proposed technique enables the reuse of the knowledge learned from one core to the remaining cores in multicore architectures. The experimental results demonstrate that the approach can significantly (2-10 times) reduce overall test generation time compared to existing approaches.

BRIEF SUMMARY OF THE DISCLOSED TECHNIQUES

Various aspects of the disclosed technology relate to fast test pattern generation based on structure similarity. In one aspect, there is a method, comprising: receiving a first set of test patterns generated for a first circuit design, a second circuit design, and a set of faults to be used for test pattern generation for the second circuit design; analyzing the first circuit design and the second circuit design to determine part of the second circuit design structurally similar to part of the first circuit design; modifying the first set of test patterns to generate a second set of test patterns for the second circuit design, the modifying comprising reusing values of bits in the first set of test patterns associated with the part of the first circuit design as values of bits in the second set of test patterns associated with the part of the second circuit design; performing fault simulation on the second circuit design using the second set of test patterns and the set of faults to determine a subset of faults in the set of faults that cannot be detected by the second set of test patterns; performing test pattern generation for the subset of faults to generate a third set of test patterns for the second circuit design; and storing the second set of test patterns and the third set of test patterns in a non-transitory computer-readable media.

The modifying may further comprise assigning random values to rest of bits of the second set of test patterns.

The analyzing may comprise: comparing first output signatures and first input signatures for the first circuit design with second output signatures and second input signatures for the second circuit design. The analyzing may further comprise: generating the second output signatures using a forward propagation process traversing the second circuit design from inputs (primary inputs, scan cells, or both) to outputs (primary outputs, scan cells, or both); and generating the second input signatures using a backward propagation process traversing the second circuit design from the outputs to the inputs. The generating the second output signatures may comprise: assigning one or more prime numbers to the inputs; and assigning prime numbers, predefined output signature computation equations, and predefined input signature computation equations to devices in the second circuit design.

The first input signatures may be derived based on propagating the first output signatures from outputs (primary outputs, scan cells, or both) of the first circuit design to inputs (primary inputs, scan cells, or both) of the first circuit design according to circuit structure of the first circuit design, and the second input signatures may be derived based on propagating the second output signatures from outputs (primary outputs, scan cells, or both) of the second circuit design to inputs (primary inputs, scan cells, or both) of the second circuit design according to circuit structure of the second circuit design.

The first output signatures and the first input signatures may be stored with each of the first output signatures being associated with corresponding first input signatures in the first input signatures, and the second output signatures and the second input signatures may be stored with each of the second output signatures being associated with corresponding second input signatures in the second input signatures.

In another aspect, there are one or more non-transitory computer-readable media storing computer-executable instructions for causing one or more processors to perform the above method.

In still another aspect, there is a system, comprising: one or more processors, the one or more processors programmed to perform the above method.

Certain inventive aspects are set out in the accompanying independent and dependent claims. Certain objects and advantages of various inventive aspects have been described herein above. Of course, it is to be understood that not necessarily all such objects or advantages may be achieved in accordance with any particular embodiment of the disclosed techniques. Thus, for example, those skilled in the art will recognize that the disclosed techniques may be embodied or carried out in a manner that achieves or optimizes one advantage or group of advantages as taught herein without necessarily achieving other objects or advantages as may be taught or suggested herein.

BRIEF DESCRIPTION OF THE DRAWINGS

Figure 1 illustrates a programmable computer system with which various embodiments of the disclosed technology may be employed.

Figure 2 illustrates an example of a fast test pattern generation tool according to various embodiments of the disclosed technology.

Figure 3 illustrates a flowchart showing a process for generating test patterns based on structural similarity that may be implemented according to various examples of the disclosed technology.

Figure 4 illustrates an example of grouped devices in a circuit design along with their assigned prime numbers.

Figure 5 illustrates an example for computing output signatures according to some embodiments of the disclosed technology.

Figure 6 illustrates an example for computing input signatures according to some embodiments of the disclosed technology.

Figure 7 illustrates an example of a circuit having five logic cones.

Figure 8 illustrates a table summarizing experimental results for modified circuit designs obtained by introducing one gate type changes.

Figure 9 illustrates a table summarizing experimental results for modified circuit designs obtained by introducing sequential changes.

DETAILED DESCRIPTION OF THE DISCLOSED TECHNIQUES

*General Considerations*

Various aspects of the disclosed technology relate to fast test pattern generation based on structure similarity. In the following description, numerous details are set forth for the purpose of explanation. However, one of ordinary skill in the art will realize that the disclosed technology may be practiced without the use of these specific details. In other instances, well-known features have not been described in details to avoid obscuring the disclosed technology.

Some of the techniques described herein can be implemented in software instructions stored on a computer-readable medium, software instructions executed on a computer, or some combination of both. Some of the disclosed techniques, for example, can be implemented as part of an electronic design automation (EDA) tool. Such methods can be executed on a single computer or on networked computers.

Although the operations of the disclosed methods are described in a particular sequential order for convenient presentation, it should be understood that this manner of description encompasses rearrangements, unless a particular ordering is required by specific language set forth below. For example, operations described sequentially may in some cases be rearranged or performed concurrently. Moreover, for the sake of simplicity, the disclosed flow charts and block diagrams typically do not show the various ways in which particular methods can be used in conjunction with other methods.

The detailed description of a method or a device sometimes uses terms like "generate," "analyze," and "modify" to describe the disclosed method or the device function/structure. Such terms are high-level descriptions. The actual operations or functions/structures that correspond to these terms will vary depending on the particular implementation and are readily discernible by one of ordinary skill in the art.

Additionally, as used herein, the term "design" is intended to encompass data describing an entire integrated circuit device. This term also is intended to encompass a smaller group of data describing one or more components of an entire device such as a portion of an integrated circuit device nevertheless. Moreover, the singular forms "a," "an," and "the" include the plural forms unless the context clearly dictates otherwise. Additionally, the term "includes" means "comprises."

*Illustrative Operating Environment*

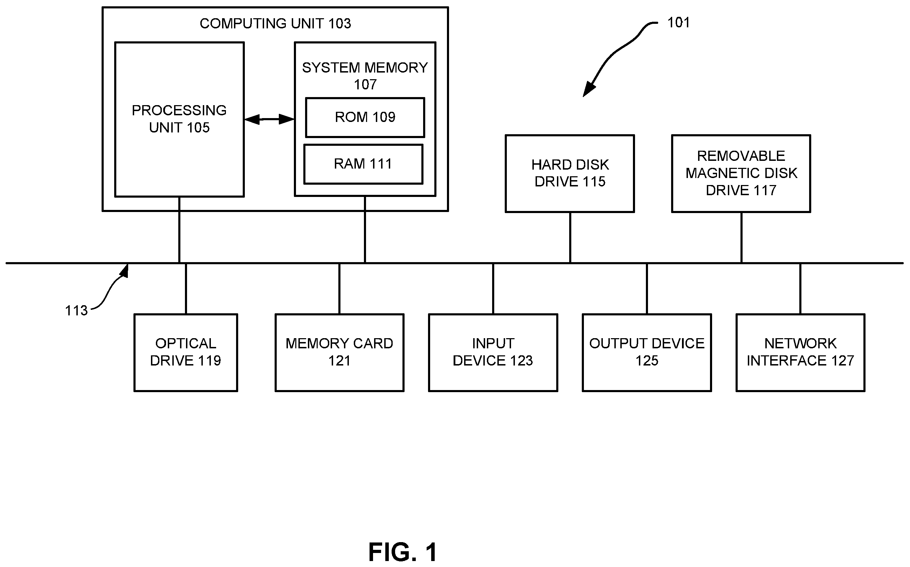

Various examples of the disclosed technology may be implemented through the execution of software instructions by a computing device, such as a programmable computer. Accordingly, Fig. 1 shows an illustrative example of a computing device 101. As seen in this figure, the computing device 101 includes a computing unit 103 with a processing unit 105 and a system memory 107. The processing unit 105 may be any type of programmable electronic device for executing software instructions, but it will conventionally be a microprocessor. The system memory 107 may include both a read-only memory (ROM) 109 and a random-access memory (RAM) 111. As will be appreciated by those of ordinary skill in the art, both the read-only memory (ROM) 109 and the random-access memory (RAM) 111 may store software instructions for execution by the processing unit 105.

The processing unit 105 and the system memory 107 are connected, either directly or indirectly, through a bus 113 or alternate communication structure, to one or more peripheral devices. For example, the processing unit 105 or the system memory 107 may be directly or indirectly connected to one or more additional memory storage devices, such as a "hard" magnetic disk drive 115, a removable magnetic disk drive 117, an optical disk drive 119, or a flash memory card 121. The processing unit 105 and the system memory 107 also may be directly or indirectly connected to one or more input devices 123 and one or more output devices 125. The input devices 123 may include, for example, a keyboard, a pointing device (such as a mouse, touchpad, stylus, trackball, or joystick), a scanner, a camera, and a microphone. The output devices 125 may include, for example, a monitor display, a printer and speakers. With various examples of the computer 101, one or more of the peripheral devices 115-125 may be internally housed with the computing unit 103. Alternately, one or more of the peripheral devices 115-125 may be external to the housing for the computing unit 103 and connected to the bus 113 through, for example, a Universal Serial Bus (USB) connection.

With some implementations, the computing unit 103 may be directly or indirectly connected to one or more network interfaces 127 for communicating with other devices making up a network. The network interface 127 translates data and control signals from the computing unit 103 into network messages according to one or more communication protocols, such as the transmission control protocol (TCP) and the Internet protocol (IP). Also, the interface 127 may employ any suitable connection agent (or combination of agents) for connecting to a network, including, for example, a wireless transceiver, a modem, or an Ethernet connection. Such network interfaces and protocols are well known in the art, and thus will not be discussed here in more detail.

It should be appreciated that the computer 101 is illustrated as an example only, and it is not intended to be limiting. Various embodiments of the disclosed technology may be implemented using one or more computing devices that include the components of the computer 101 illustrated in Fig. 1, which include only a subset of the components illustrated in Fig. 1, or which include an alternate combination of components, including components that are not shown in Fig. 1. For example, various embodiments of the disclosed technology may be implemented using a multiprocessor computer, a plurality of single and/or multiprocessor computers arranged into a network, or some combination of both.

*Design For Test, Test Pattern Generation, And Testing*

The reduction in feature size increases the probability that a manufacture defect in the integrated circuit will result in a faulty chip. A very small defect can result in a faulty transistor or interconnecting wire. Even a single faulty transistor or wire can cause the entire chip to function improperly. Manufacture defects are unavoidable nonetheless, no matter whether the manufacturing process is at the prototype stage or the highvolume manufacturing stage. It is thus necessary to test chips during the manufacturing process. Diagnosing faulty chips is also needed to ramp up and to maintain the manufacturing yield.

Testing typically includes applying a set of test stimuli (test patterns) to the circuit-under-test and then analyzing responses generated by the circuit-under-test. Functional testing attempts to validate that the circuit-under-test operates according to its functional specification while structural testing tries to ascertain that the circuit-under-test has been assembled correctly from some low-level building blocks as specified in a structural netlist and that these low-level building blocks and their wiring connections have been manufactured without defect. For structural testing, it is assumed that if functional verification has shown the correctness of the netlist and structural testing has confirmed the correct assembly of the structural circuit elements, then the circuit should function correctly. Structural testing has been widely adopted at least in part because it enables the test (test pattern) generation to focus on testing a limited number of relatively simple circuit elements rather than having to deal with an exponentially exploding multiplicity of functional states and state transitions.

To make it easier to develop and apply test patterns, certain testability features are added to circuit designs, which is referred to as design for test or design for testability (DFT). Scan testing is the most common DFT method. In a basic scan testing scheme, all or most of internal sequential state elements (latches, flip-flops, et al.) in a circuit design are made controllable and observable via a serial interface. These functional state elements are usually replaced with dual-purpose state elements called scan cells. Scan cells are connected together to form scan chains - serial shift registers for shifting in test patterns and shifting out test responses. A scan cell can operate as originally intended for functional purposes (functional/mission mode) and as a unit in a scan chain for scan (scan mode). A widely used type of scan cell includes an edgetrigged flip-flop with two-way multiplexer for the data input. The two-way multiplexer is typically controlled by a single control signal called scan_enable, which selects the input signal for a scan cell from either a scan signal input port or a system signal input port. The scan signal input port is typically connected to an output of another scan cell while the system signal input port is connected to the functional logic. Scan cells can serve as both a control point and an observation point. Control points can be used to set certain logic values at some locations of the circuit-under-test, exciting (activating) a fault and propagating the incorrect value to an observation point. Scan testing allows the test equipment to access gates deeply embedded through the primary inputs/outputs and/or some physical test points and can remove the need for complicated state transition sequences when trying to control or observe what is happening at some internal circuit element.

Test patterns for scan testing are typically generated through an automatic test pattern generation (ATPG) process. ATPG usually focuses on a set of faults derived from a gate-level fault model. A defect is a flaw or physical imperfection caused in a device during the manufacturing process. A fault model (or briefly a fault) is a description of how a defect alters design behavior. For a given target fault, ATPG comprises two phases: fault activation and fault propagation. Fault activation establishes a signal value at the fault site opposite that produced by the fault. Fault propagation propagates the fault effect forward by sensitizing a path from a fault site to a scan cell or a primary output. A fault at a site is said to be detected by a test pattern if a test response value captured by a scan cell or a primary output is different than the expected value. The objective of ATPG is to find a test pattern that, when applied to the circuit, enables testers to distinguish between the correct circuit behavior and the faulty circuit behavior caused by one or more particular faults. Effectiveness of ATPG is measured by the fault coverage achieved for the fault model and the number of generated vectors (test pattern counts), which should be directly proportional to test application time. Here, the fault coverage is defined as a ratio of the number of detected faults vs. the total number of faults.

The most popular fault model used in practice is the single stuck-at fault model. In this model, one of the signal lines in a circuit is assumed to be stuck at a fixed logic value, regardless of what inputs are supplied to the circuit. The stuck-at fault model is a logical fault model because no delay information is associated with the fault definition. Delay faults cause errors in the functioning of a circuit based on its timing. They are caused by the finite rise and fall time periods of the signals in the gates, as well as, the propagation delay of interconnects between the gates. Transition faults are used for their simplicity in modeling spot defects that affect delays at inputs or outputs of gates. Under scan-based tests, the transition faults are associated with an extra delay that is large enough to cause the delay of any path through the fault site to exceed the clock period. Cell internal fault models can be derived using transistorlevel circuit simulations (analog simulations). This approach can pinpoint the defect location within a cell for various cell internal defects.

During the circuit design and manufacturing process, a manufacturing test screens out chips (dies) containing defects. The test itself, however, does not identify the reason for the unacceptable low or fluctuating yield that may be observed. Physical failure analysis (PFA) can inspect the faulty chip to locate the defect location(s) and to discover the root cause. The process usually includes etching away certain layers and then imaging the silicon surface by scanning electronic microscopy or focused ion beam systems. This PFA process is laborious and time consuming. To facilitate the PFA process, diagnosis (also referred to as scan diagnosis) is often employed to narrow down possible locations of the defect(s) based on analyzing the fail log (fail file, failure file). The fail log typically contains information about when (e.g., tester cycle), where (e.g., at what tester channel), and how (e.g., at what logic value) the test failed and which test patterns generate expected test responses. The layout information of the circuit design may also be employed to further reduce the number of defect suspects.

Test application in chip manufacturing test is normally performed by automatic test equipment (ATE) (a type of testers). Scan-based tests consume significant amounts of storage and test time on ATE. The data volume increases with the number of logic gates on the chip and the same holds for the number of scan cells. Yet, practical considerations and ATE specifications often limit both the number of pins available for scan in/out and the maximum scan frequency. It is highly desirable to reduce the amount of test data that need to be loaded onto ATE and ultimately to the circuit under test. Fortunately, test patterns are compressible mainly because only 1% to 5% of test pattern bits are typically specified bits (care bits) while the rest are unspecified bits (don't-care bits). Unspecified bits can take on any values with no impact on the fault coverage. Test compression may also take advantage of the fact that test cubes tend to be highly correlated. A test cube is a deterministic test pattern in which the don't-care bits are not filled by ATPG. The correlation exists because faults are structurally related in the circuit.

Various test compression techniques have been developed. In general, additional onchip hardware before and after scan chains is inserted. The hardware (decompressor) added before scan chains is configured to decompress test stimulus coming from ATE, while the hardware (compactor) added after scan chains is configured to compact test responses captured by the scan chains. The decompressor expands the data from n tester channels to fill greater than n scan chains. The increase in the number of scan chains shortens each scan chain and thus reduces the number of clock cycles needed to shift in each test pattern. Thus, test compression can not only reduce the amount of data stored on the tester but also reduce the test time for a given test data bandwidth.

All of the above-mentioned processes, design insertion for testing, test pattern generation, and logic diagnosis, are normally performed by various electronic design automation tools such as those in the Tessent family of software tools available from Mentor Graphics Corporation, Wilsonville, Oregon.

*Fast Test Pattern Generation Tool*

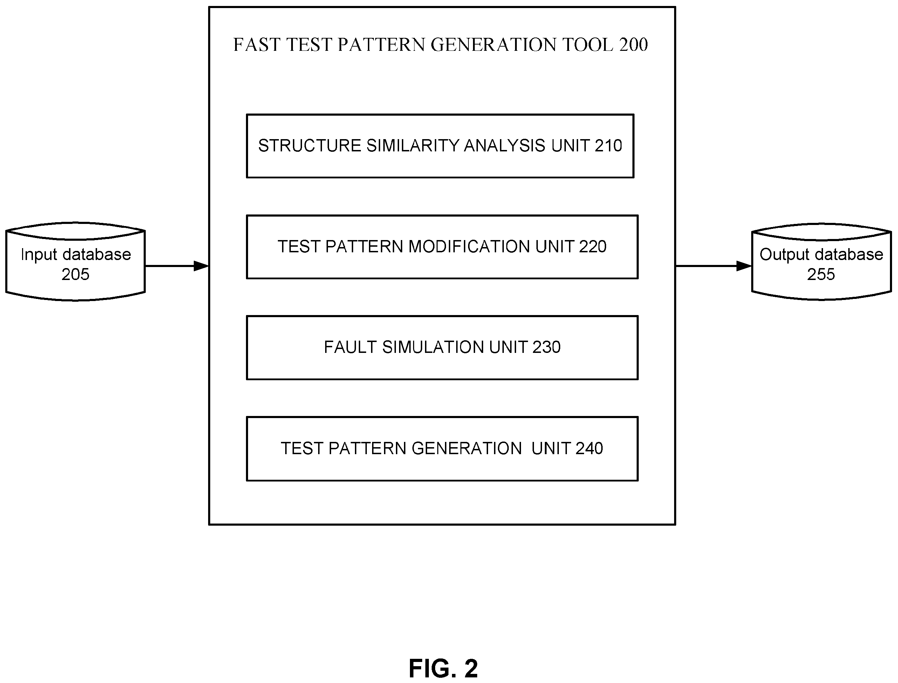

Fig. 2 illustrates an example of a fast test pattern generation tool 200 according to various embodiments of the disclosed technology. As seen in this figure, the fast test pattern generation tool 200 includes a structure similarity analysis unit 210, a test pattern modification unit 220, a fault simulation unit 230, and a test pattern generation unit 240. Some implementations of the fast test pattern generation tool 200 may cooperate with (or incorporate) one or both of an input database 205 and an output database 255.

As will be discussed in more detail below, the fast test pattern generation tool 200 can receive a first circuit design, a second circuit design, a first set of test patterns generated for the first circuit design, and a set of faults to be used for test pattern generation for the second circuit design. The structure similarity analysis unit 210 can analyze the first circuit design and the second circuit design to determine part of the second circuit design structurally similar to part of the first circuit design. The test pattern modification unit 220 can modify the first set of test patterns to generate a second set of test patterns for the second circuit design. The modification comprises reusing bits of the first set of test patterns associated with the part of the first circuit design as corresponding bits of the second set of test patterns. The fault simulation unit 230 can perform fault simulation on the second circuit design using the second set of test patterns and the set of faults to determine a subset of faults in the set of faults that cannot be detected by the second set of test patterns. The test pattern generation unit 240 can perform test pattern generation for the subset of faults to generate a third set of test patterns for the second circuit design. The fast test pattern generation tool 200 can then store the second set of test patterns and the third set of test patterns together as test patterns for the second circuit design in the output database 255.

As previously noted, various examples of the disclosed technology may be implemented by one or more computing systems, such as the computing system illustrated in Fig. 1. Accordingly, one or more of the structure similarity analysis unit 210, the test pattern modification unit 220, the fault simulation unit 230, and the test pattern generation unit 240 may be implemented by executing programming instructions on one or more processors in one or more computing systems, such as the computing system illustrated in Fig. 1. Correspondingly, some other embodiments of the disclosed technology may be implemented by software instructions, stored on a non-transitory computer-readable medium, for instructing one or more programmable computers/computer systems to perform the functions of one or more of the structure similarity analysis unit 210, the test pattern modification unit 220, the fault simulation unit 230, and the test pattern generation unit 240. As used herein, the term "non-transitory computer-readable medium" refers to computer-readable medium that are capable of storing data for future retrieval, and not propagating electro-magnetic waves. The non-transitory computer-readable medium may be, for example, a magnetic storage device, an optical storage device, or a solid state storage device.

It also should be appreciated that, while the structure similarity analysis unit 210, the test pattern modification unit 220, the fault simulation unit 230, and the test pattern generation unit 240 are shown as separate units in Fig. 2, a single computer (or a single processor within a master computer) or a single computer system may be used to implement some or all of these units at different times, or components of these units at different times.

With various examples of the disclosed technology, the input database 205 and the output database 255 may be implemented using any suitable computer readable storage device. That is, either of the input database 205 and the output database 255 may be implemented using any combination of computer readable storage devices including, for example, microcircuit memory devices such as read-write memory (RAM), read-only memory (ROM), electronically erasable and programmable read-only memory (EEPROM) or flash memory microcircuit devices, CD-ROM disks, digital video disks (DVD), or other optical storage devices. The computer readable storage devices may also include magnetic cassettes, magnetic tapes, magnetic disks or other magnetic storage devices, holographic storage devices, or any other non-transitory storage medium that can be used to store desired information. While the input database 205 and the output database 255 are shown as separate units in Fig. 2, a single data storage medium may be used to implement some or all of these databases.

*Fast Test Pattern Generation Based On Structure Similarity*

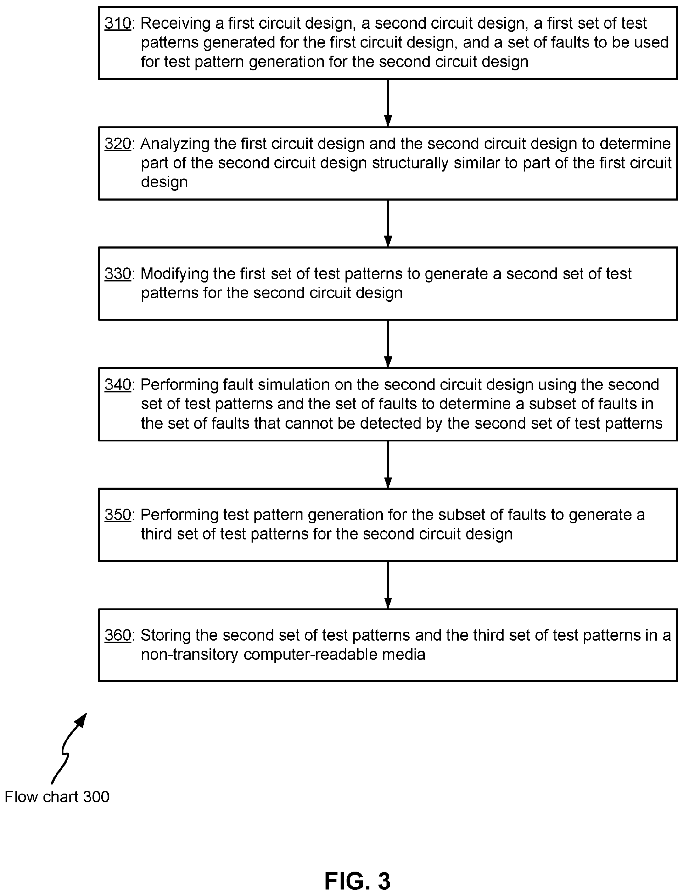

Fig. 3 illustrates a flowchart 300 showing a process for generating test patterns based on structural similarity that may be implemented according to various examples of the disclosed technology. For ease of understanding, methods of generating test patterns based on structural similarity that may be employed according to various embodiments of the disclosed technology will be described with reference to the fast test pattern generation tool 200 in Fig. 2 and the flow chart 300 illustrated in Fig. 3. It should be appreciated, however, that alternate implementations of a fast test pattern generation tool 200 may be used to perform the methods of generating test patterns based on structural similarity illustrated by the flow chart 400 according to various embodiments of the disclosed technology. Likewise, the fast test pattern generation tool 200 may be employed to perform other methods of generating test patterns based on structural similarity according to various embodiments of the disclosed technology.

In operation 310, the fast test pattern generation tool 200 receives a first circuit design, a second circuit design, a first set of test patterns generated for the first circuit design, and a set of faults to be used for test pattern generation for the second circuit design. The first circuit design and the second circuit design are structurally similar. They may originate from the same circuit design. For example, the second design may be obtained by modifying the first circuit design based on an engineering change order. The first and second circuit designs may be a whole circuit design or a portion of a design such as a core or a circuit block. Many integrated circuits now include billions of transistors. It is virtually impossible to design them flat (with no partitioning). Electronic Design Automation (EDA) tools would not be able to process them efficiently. Additionally, there is significant reuse of Intellectual Property (IP) from one design to another. Large designs, known as Systems-On-A-Chip (SOCs), include a large number of "cores" that are used as building blocks (also referred to circuit blocks). Each core is usually designed and validated individually first, then integrated with other cores to form the entire SOC. This is known as hierarchical design. Ideally, most of the design and validation work is done at the core level, which is smaller and more manageable. This leaves the integration and chip-level validation to be done at the top level. All work done at the core level can also be done earlier when working on the core, and moved out of the critical path when the SOC comes together closer to the tape-out deadline. Test patterns generated for testing a core may be reused for testing multiple instances of the core, reducing not only pattern generation time but also testing time.

The first set of test patterns may be generated through a conventional automatic test pattern generation process or the present process itself but based on another set of test patterns for another circuit design. The set of faults to be used for test pattern generation for the second circuit design and the set of faults used for test pattern generation for the first circuit design may share a large number of faults due to the structural similarity between the two circuit designs.

In operation 320, the structure similarity analysis unit 210 analyzes the first circuit design and the second circuit design to determine part of the second circuit design structurally similar to part of the first circuit design. According to various embodiments of the disclosed technology, the analysis can comprise: comparing first output signatures and first input signatures for the first circuit design with second output signatures and second input signatures for the second circuit design. An input/output signature of a device can be a number computed based on the type of the device and its corresponding logic cone. An input/output signature of a circuit design can be obtained by traversing the circuit design from outputs/inputs to the input/output of interest and by using the input/output signatures of the devices encountered. The input/output signatures obtained therefrom can capture some structure property of circuit design. An input of the circuit design can be a primary input or a scan cell. Similarly, an output of the circuit design can be a primary output or a scan cell. It should be noted that the input and output signatures for the first circuit design may be computed in the operation 320 or while performing the patent generation process that generates the first set of test patterns.

The structure similarity analysis unit 210 may use a forward propagation process to derive the first and second output signatures and then a backward propagation process to derive the first and second input signatures. For a particular circuit design, the forward propagation process may start with some numbers at inputs (primary inputs, scan cells, or both) and propagate these numbers through devices to outputs (primary outputs, scan cells, or both). The backward propagation process may start with the just derived output signatures at the outputs and propagate them backwards through the devices to the inputs. According to some embodiments of the disclosed technology, the structure similarity analysis unit 210 may assign prime numbers, predefined output signature computation equations, and predefined input signature computation equations to the devices in the circuit design-under-analysis and also uses one or more prime numbers as the initial numbers at the inputs for the forward propagation process and the backward propagation process. Here, the prime number assigned to a device is referred to as a mask of the device. The devices may be divided into groups (device types or gate types) with each group being assigned a unique prime number randomly selected in a predefined range such as between 1 - 15 million.

The derived first output and input signatures may be stored in a first dictionary in which each of the first output signatures is associated with corresponding first input signatures in the first input signatures, wherein the inputs of the first circuit design having the corresponding first input signatures drive the output of the first circuit design having the each of the first output signatures. The derived second output and input signatures may also be stored in a second dictionary in which each of the second output signatures is associated with corresponding second input signatures in the second input signatures, wherein the inputs of the second circuit design having the corresponding second input signatures drive the output of the second circuit design having the each of the second output signatures.

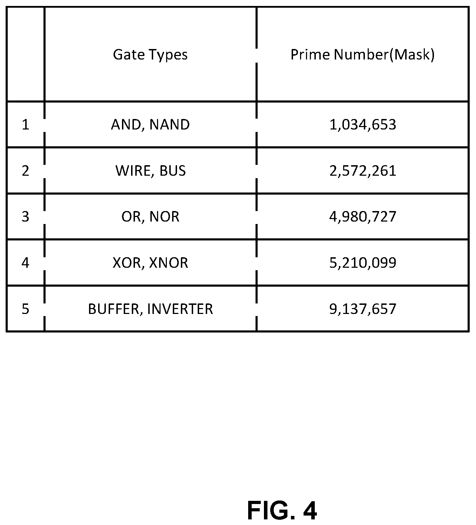

Fig. 4 illustrates an example of grouped devices in a circuit design along with their assigned prime numbers. The devices are grouped into five device types: 1) AND gates and NAND gates; 2) Wires and Buses; 3) OR gates and NOR gates; 4) XOR gates and XNOR gates; and 5) Buffers and Inverters. Each category is assigned with a prime number between 1-15 million. For example, the device type of OR gates and NOR gates has a prime number of 4,980,727, and the device type of Buffers and Inverters has a prime number of 9,137,657. A variable called "Output Invert" may be used during the signature computation to distinguish gate types in each category shown in Fig. 4. "Output Invert" can be set to be false for OR, AND, BUFFER, XOR, and WIRE gate types, but true for NOR, NAND, INVERTER, XNOR, and BUS gate types. When the "Output Invert" is true, the bitwise complement of the computed value can be stored as the signature of the gate.

As noted previously, the structure similarity analysis unit 210 can compute the output signatures by propagating some prime numbers from inputs to outputs. The output signature of a gate can be computed by an equation that takes into account the signatures of the gate inputs and the mask of the gate. An example of the equation for gate types AND, WIRE, OR, XOR, and BUFFER is shown below in equation (1):

$$
\begin{aligned}
Output\ &Signature\ of\ a\ Gate_i \\
&= \left( \sum_i (Rotate(Output\ Signature\ of\ fanin\ of\ Gate_i) \right. \\
&\quad \left. + Group\ Gate\ Mask\ of\ Gate_i) \right)
\end{aligned}
\tag{1}
$$

An example of the equation for gate types NAND, BUS, NOR, XNOR, and INVERTER is shown below in equation (2):

Output Signature of a Gate$_i$

$$= \left( \text{Rotate} \left( \sum_i (\text{Rotate(Output Signature of fanin of Gate}_i) + \text{Group Gate Mask of Gate}_i) \right) \right)^C \quad (2)$$

The addition operations in the equations (1) and (2) are performed with carry. The C in the equation (2) stands for the bitwise complement. The Rotate function refers to a rotate left operation. It should be noted that the Rotate function can use a rotate right operation instead.

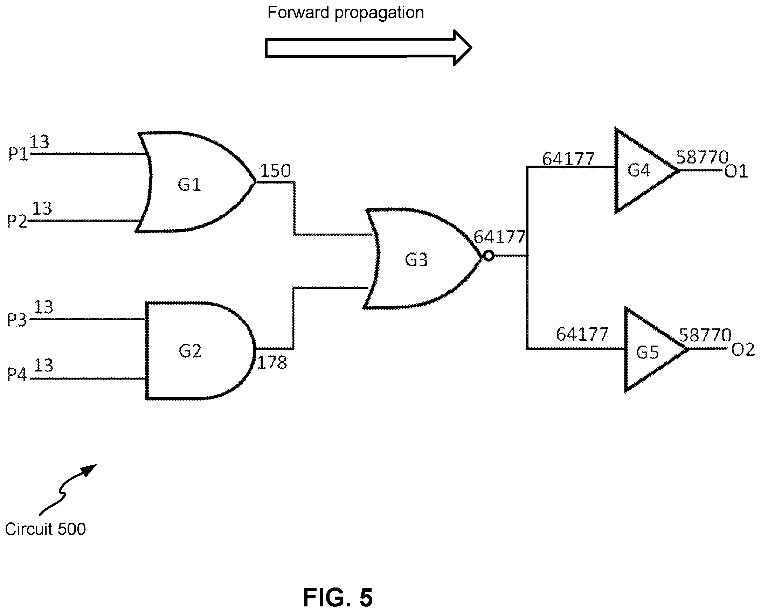

Fig. 5 illustrates an example for computing output signatures according to some embodiments of the disclosed technology. In the figure, a circuit 500 has four inputs (P1, P2, P3, P4), two outputs (O1, O2), one AND gate (G2), one OR gate (G1), one NOR gate (G3), and two INVERTER gates (G4, G5). For simplicity, the signatures for this example are computed using 16-bit integers, and smaller values of prime numbers are used as masks. All inputs are initialized to a prime number of 13, the mask for the AND gate G2 (the gate type 1) is assigned a prime number of 37, the mask for the OR gate G1 and the NOR gate G3 (the gate type 3) is assigned a prime number of 23, and the mask for the INVERTER gates G4 and G5 (the gate type 5) is assigned a prime number of 51.

The inputs of the OR gate G1 are P1 and P2, whose output signatures are initialized to 13. The output signature computation for the OR gate G1 follows the equation (1). First, the output signatures of the inputs P1 and P2 are rotated. The output signature of the inputs after the rotation is 26 (from 0000 1101 to 0001 1010). Next, the rotated output signatures of P1 and P2 are added along with the group gate mask. For the OR gate G1, this value is computed as 26 + 26 + 23 = 75. This result is rotated, and the value obtained is 150 (from 0100 1011 to 1001 0110). This value is stored as the output signature of the OR gate G1. The output signatures of the gates G2, G4, and G5 can be computed in the same way as shown in the equation (1), and the output signature of the gate G3 can be computed as shown in the equation (2). The output signatures of all of the gates are shown in Fig. 5.

After obtaining the output signatures, the structure similarity analysis unit 210 can compute the input signatures by propagating these output signatures from outputs to inputs. An example of the equation for the computation of the input signature for gate types AND, WIRE, OR, XOR, and BUFFER is shown below in equation (3):

Input Signature of a Gate$_i$

$$= \text{EXOR} \left( \sum_i \text{Rotate(Input Signature of fan\_out of Gate}_i), \text{Group Gate Mask of Gate}_i \right) \quad (3)$$

An example of the equation for the computation of the input signature for gate types NAND, BUS, NOR, XNOR, and INVERTER is shown below in equation (4):

Input Signature of a Gate$_i$

$$= \left( \text{EXOR} \left( \sum_i \text{Rotate(Input Signature of fan\_out of Gate}_i), \text{Group Gate Mask of Gate}_i \right) \right)^C \quad (4)$$

The addition operations in the equations (3) and (4) are performed with carry.

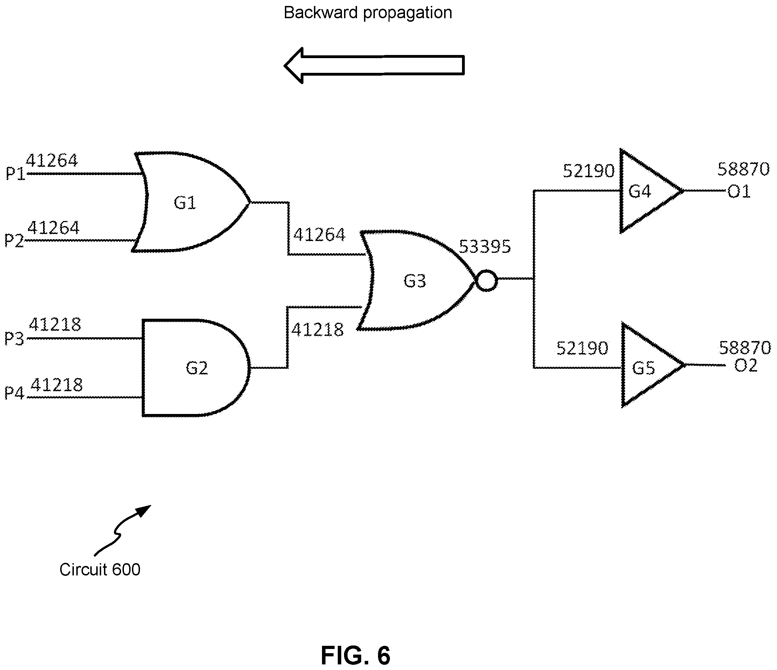

Fig. 6 illustrates an example for computing input signatures according to some embodiments of the disclosed technology. A circuit 600 is the same circuit as the circuit 500 in Fig. 5. The input signature of the outputs O1 and O2 are initialized to their output signatures. The algorithm traverses the circuit from outputs to inputs. The input signatures of the gates G1, G2, G4, and G5 can be computed in the same way as shown in the equation (3), and the input signature of the gate G3 can be computed as shown in the equation (4). For example, the gate G3 is a NOR gate belonging to the gate type 3, whose mask is 23. The gates G4 and G5 are the fan-out gates of the gate G3, with input signature 52,190 for both. The input signatures of the gates G4 and G5 after rotation are 38,845. The rotated input signature values of the gates G4 and G5 are added with the carry. Using 16-bit integers, the result is 12,155. This value is EXORed with the gate type 3 mask, which evaluates to 12,140. As discussed earlier, the Output Invert variable of the NOR gate is set to true. The input signature of the gate G3 is the bitwise complement of 12,140, which is 53,395.

The following shows an example of a detailed algorithm for signature computation that can be implemented according to some embodiments of the disclosed technology:

**Algorithm 1** Signature computation for a circuit

**Input:** Design

**Output:** Output signatures, Input signatures, Dictionary

*Initialization* :

1: For every gate, assign its output and input signatures to 0

2: Initialize all output signatures of primary inputs to prime-number1 randomly chosen between 1-15 million.

3: Initialize all output signatures of pseudo primary inputs to prime-number2 randomly chosen between 1-15 million.

4: Assign different prime numbers as masks for each type of gate

*Output Signature*

5: **for** each gate$_i$ from inputs to outputs **do**

6:      Rotate the output signature at the inputs of gate$_i$ and add

7:      Add mask of gate$_i$ to the result in step 6

8:      Rotate the output signature obtained in step 7

9: **end for**

10: **if** Output_Invert is true **then**

11: Complement the signature

12: **end if**

*Input Signature*

13: Initialize all input signatures of primary outputs and pseudo-primary outputs to their output signatures

14: **for** each gate$_i$ from outputs to inputs **do**

15:     **for** each fanout of gate$_i$ **do**

16:         Rotate the input signature

17:         EXOR result in Step 16 with the mask of the gate$_i$

18:     **end for**

19:     Add signatures after Step 17

20: **end for**

21: **if** Output_Invert is true **then**

22:     Complement the signature

23: **end if**

*Dictionary*

24: **for** gate$_i$ that is an observation point **do**

25:     Store the inputs driving the output in a vector

26:     For each output signature, insert a vector of inputs driving the output cone.

27: **end for**

The above Algorithm 1 can generate two dictionaries: dict1 and dict2 pertaining to the first circuit design and the second circuit design, respectively. The dictionaries contain output signatures as the key value. Each key is linked to a set of vectors that correspond to the inputs driving the output whose signature is equal to the key. Output cones with equivalent structures can have the same signature but possibly different vectors of inputs. Using the generated dictionaries, a set of input vectors from a cone in the first circuit can be mapped to a set of input vectors of an identical cone in the second circuit design.

Once the first output signatures and the first input signatures for the first circuit design and the second output signatures and the second input signatures for the second circuit design are computed, the structure similarity analysis unit 210 can compare them to determine part of the second circuit design structurally similar to part of the first circuit design. This may be performed by reading the dictionaries dict1 and dict2. For every key in dict1 and dict2, a mapping is done when the input signatures of the input vector in dict1 match the input signatures of the input vector in dict2. The following shows an example of a detailed algorithm for signature comparison that can be implemented according to some embodiments of

the disclosed technology:

**Algorithm 2** Comparing signatures from circuit1 and circuit2

**Input:** Input signatures, dict1, dict2

**Output:** Mapping Information

1: Mark all vectors in dict1 and dict2 as unselected

2: **for** each key in dict1 **do**

3:   **if** key in dict2 **then**

4:       **for** every unselected vector1 in dict1(key) **do**

5:           **for** every unselected vector2 in dict2(key) **do**

6:               **if** input signatures of vector1 and vector2 are equal **then**

7:                   Map the inputs in the vectors according to the input signatures

8:                   Mark vector1 and vector2 as selected

9:               **end if**

10:           **end for**

11:       **end for**

12:   **end if**

13: **end for**

In the above Algorithm 2, input signatures, dict1 and dict2 are given as inputs. The keys of these dictionaries are the output signatures. The algorithm finds the output signatures common in dict1 and dict2 and iterates through the input vectors to find ones that have the same input signatures in dict1 and dict2. Once a vector in dict1 is matched with a vector in dict2, these vectors are not considered in further mapping. In this way, inputs are mapped from the first circuit design to the second circuit design in those sections of the circuit where input and output cones are structurally identical. In the experiments performed on some industrial circuits, the mapping algorithm accurately identified cones that were identical in two circuits.

It should be noted that the above-described methods for determining input/output signatures are just examples. A person of ordinary skill in the art would appreciate that other methods can be used to determine input/output signatures which can capture structure property of a circuit design and that parameters other than input/output signatures can be used to determine structural similarity of two circuit designs.

Referring back to Fig. 3, in operation 330, the test pattern modification unit 220 can modify the first set of test patterns to generate a second set of test patterns for the second circuit design. The modification comprises reusing values of bits in the first set of test patterns associated with the part of the first circuit design as values of corresponding bits of the second set of test patterns. With various implementations of the disclosed technology, the test pattern modification unit 220 can reuse values of the bits in the first set of test patterns corresponding to the inputs for which the input signatures in the first circuit design match the input signatures in the second circuit design and assign random values to rest of the bits in the second set of test patterns. A structurally similar or identical cone will have the same input and output signatures in both of the circuit designs. The faults in such input and output cones of the second circuit design are very likely detectable by the second set of test patterns. However, the second set of test patterns may not be able to detect faults in a cone that does not have a similar counterpart in the first circuit design or even in a cone that shares inputs with a cone that is structurally different in the first circuit design.

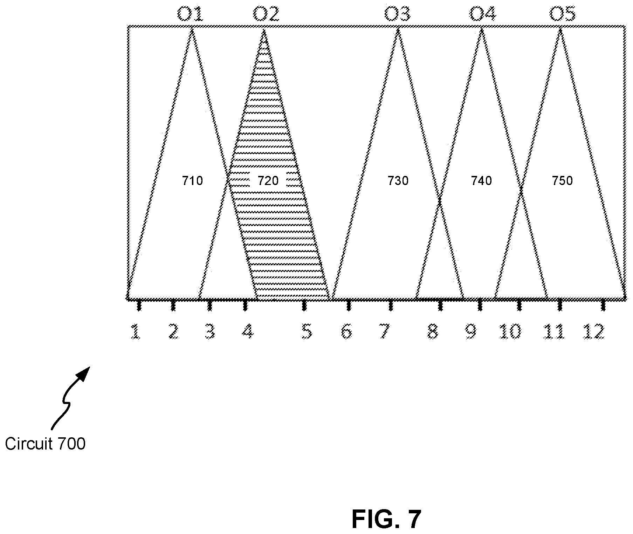

Fig. 7 illustrates an example of a circuit design 700 having five logic cones 710, 720, 730, 740, and 750. The logic cones 710-750 have outputs labeled as O1-O5, respectively. Inputs labeled as 1-12 are either within one of the logic cones 710-750 exclusively or shared by two of them. This circuit design 700 differs from another circuit design at the shaded region in the cone 720, whereas the cones 710, 730, 740 and 750 are structurally identical in both circuit designs. The cone 720 has the output O2 and the inputs 3, 4, and 5. The structural difference causes the output and input signatures of the cone 720 to be different for the two circuit designs. In contrast, the output signatures of O1, O3, O4, and O5 would remain the same. As Fig. 7 shows, some of the inputs of the cone 720 are shared by the cone 710 (the inputs 3 and 4). Hence, in the cone 710, the signatures of inputs 3 and 4 would be different for the two circuit designs. The test pattern set obtained for the circuit design 700 based on the modification described above can probably detect the faults in the cones 730, 740, and 750 (all the input and output signatures of these cones remain the same), whereas not all of the faults in the cones 710 and 720 can be detected. Without computing input signatures, it would not be possible to avoid matching inputs of cones that were structurally different in both circuits.

Referring back to Fig. 3, in operation 340, the fault simulation unit 230 performs fault simulation on the second circuit design using the second set of test patterns and the set of faults to determine a subset of faults in the set of faults that cannot be detected by the second set of test patterns. The fault simulation unit 230 can be implemented using a commercial fault simulation tool such as those in the Tessent family of software tools available from Siemens EDA, Wilsonville, Oregon. As noted previously, the structural difference dictates that the second set of test patterns probably cannot detect all of the faults in the set of faults targeted for the second circuit design. However, the structural similarity for the large part of the circuit ensures that the subset of faults is a small set of faults in the set of faults.

In operation 350, the test pattern generation unit 240 performs test pattern generation for the subset of faults to generate a third set of test patterns for the second circuit design. The test pattern generation unit 240 can be implemented using a commercial ATPG tool such as those in the Tessent family of software tools available from Siemens EDA, Wilsonville, Oregon. Due to the small size of the subset of faults, the ATPG process can be very short compared to a conventional one.

In operation 360, the fast test pattern generation tool 200 stores the second set of test patterns and the third set of test patterns together as test patterns for the second circuit design in the output database 255.

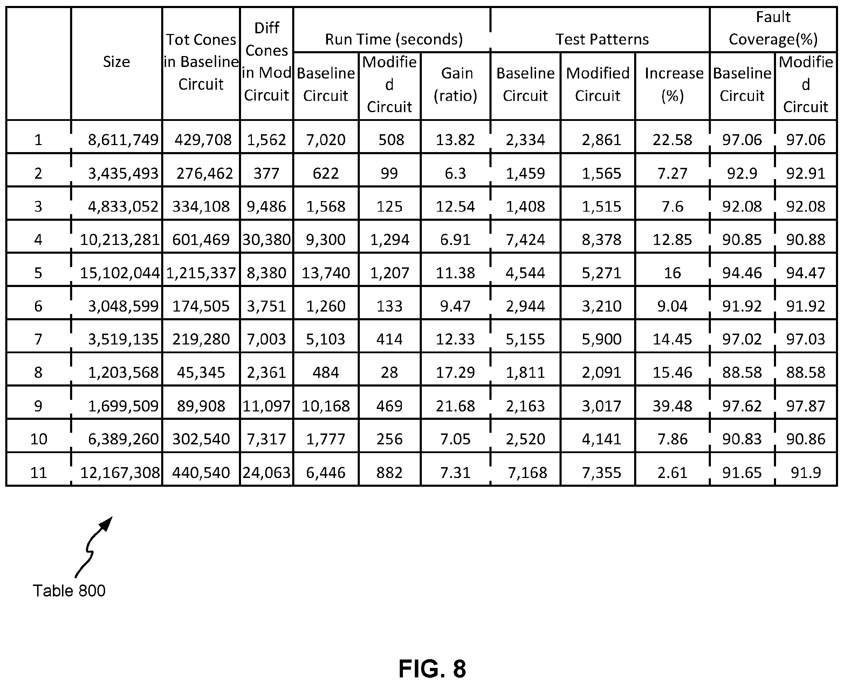

An embodiment of the disclosed technology is tested using 11 industrial circuits. The first experiment employs circuits with logical changes, and the second uses circuits with sequential changes. In the first experiment, similar designs are obtained by introducing one gate type change at a time. Such modified versions of a circuit emulate designs that are very similar to one another or minor changes that are introduced due to either ECO or after place and route during the design process. Fig. 8 illustrates a table 800 summarizing results of the first experiment. For each circuit, ten different versions are generated by introducing a single change at a random location in each of the versions. The modifications involve changing a gate type, for example, AND to OR, AND to NAND, etc., in the gate-level netlist. Each row of the table 800 corresponds to one of the 11 industrial circuits, showing several parameters averaged over the ten versions of the circuit. These results are shown under the sub-column "Modified Circuit". Sub-column "Baseline Circuit" shows the results for the original circuit (baseline circuit) in the respective categories. The first column, "size", gives the total number of gates present in each circuit. Column "Tot Cones in Baseline Circuit" shows the total number of output cones present in the baseline circuit. Column "Diff Cones in Mod Circuit" shows the number of output cones that changed in the modified circuit compared to the baseline circuit after inducing the changes. Column "Run Time" shows the overall time taken in seconds for test pattern generation. For a modified circuit, the total runtime includes the time taken for signature computation, mapping (comparison), and fault simulation, as well as for incremental ATPG. Sub-column "Gain" is obtained as the ratio of the runtime of the baseline circuit to the average of the runtime of the modified circuits. Column "Test Patterns" shows the total number of test patterns after ATPG. The sub-column "Increase (%)" gives the percentage increase in the number of test patterns. The last column, "Fault coverage", shows the fault coverage achieved in the baseline circuit and the average fault coverage seen in the different versions of the modified circuit.

Column "Diff Cones in Mod Circuit" in the table 800 shows that introducing a single change can affect between 0.1% to 12.3% of the total number of output cones for the 11 industrial circuits. Within the 10 different versions of a circuit, an average of 16% variation is seen between the minimum and the maximum number of cones that are affected. The number of output cones different in the modified circuit compared to the baseline circuit directly affects the time taken for the incremental ATPG. The lower the number of different cones, the higher the number of matched inputs, resulting in a considerable number of faults being detected in the modified circuit after mapping of test patterns. By transforming the test set and then fault simulating, all faults from the cones that are structurally identical in the modified circuit compared to the baseline circuit are detected. The transformation of test patterns results in an improvement in the total runtime of the modified circuit. The improvement in runtime is observed because only a small subset of the total faults require test generation process. This translates to an average of 11-fold gain in runtime to achieve the same fault coverage in the modified circuit compared to the baseline circuit for all the different industrial circuits. The gain in runtime depends on the circuits and varies from 6 to 22-fold. This shows that by utilizing the structural similarity between the circuits, the test generation time can be considerably reduced.

The reduction in runtime can help with the testability determination. While there is an average of 14% increase in the number of test patterns, this can be mitigated by rerunning test pattern generation after the design converges or occasionally when the number of patterns increases significantly.

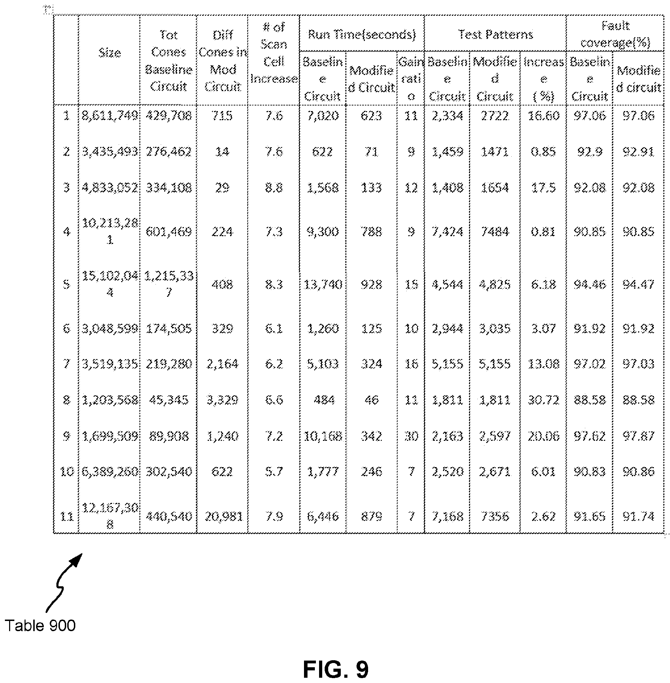

The second experiment looks into sequential changes in a circuit. Forward and backward retiming is done in a circuit, which changes the total number of scan cells in the modified circuit compared to the baseline circuit. Fig. 9 illustrates a table 900 summarizing the results for sequential changes. The table 900 is tabulated in the same way as the table 800. Column "# of ScanCell Increase" in the table 900 gives the average number of scan cells increased in 10 modified versions of each circuit. The increase in the number of scan cells in the modified circuit varies from 2-15 compared to the baseline circuit. The table 900 shows an average of 12-fold gain in runtime to achieve the same fault coverage in the modified circuit compared to the baseline circuit. The results from sequential changes remain consistent with the observations drawn from the table 900. The time taken for incremental ATPG and total test generation process depends on the number of cones affected by the change introduced in the previous versions of a given circuit. As the procedure focuses on the testability of the circuit, the average increase of 11% seen in the number of test patterns of the modified circuit compared to the baseline circuit is acceptable. As discussed earlier, this can be mitigated by rerunning test pattern generation.

*Conclusion*

Having illustrated and described the principles of the disclosed technology, it will be apparent to those skilled in the art that the disclosed embodiments can be modified in arrangement and detail without departing from such principles. In view of the many possible embodiments to which the principles of the disclosed technologies can be applied, it should be recognized that the illustrated embodiments are only preferred examples of the technologies and should not be taken as limiting the scope of the disclosed technology. The scope of the disclosed technology is defined by the following claims. We therefore claim as our disclosed technology all that comes within the scope of these claims.

**Claims**

1.    A method, executed by at least one processor (105) of a computer (101), comprising:

   receiving (310) a first set of test patterns generated for a first circuit design, a second circuit design, and a set of faults to be used for test pattern generation for the second circuit design;
   analyzing (320) the first circuit design and the second circuit design to determine part of the second circuit design structurally similar to part of the first circuit design;
   the method is **characterised by**
   modifying (330) the first set of test patterns to generate a second set of test patterns for the second circuit design, the modifying comprising reusing values of bits in the first set of test patterns associated with the part of the first circuit design as values of bits in the second set of test patterns associated with the part of the second circuit design;
   performing fault simulation (340) on the second circuit design using the second set of test patterns and the set of faults to determine a subset of faults in the set of faults that cannot be detected by the second set of test patterns;
   performing test pattern generation (350) for the subset of faults to generate a third set of test patterns for the second circuit design; and
   storing (360) the second set of test patterns and the third set of test patterns in a non-transitory computer-readable media.

2.    The method recited in claim 1, wherein the analyzing (320) comprises:
   comparing first output signatures and first input signatures for the first circuit design with second output signatures and second input signatures for the second circuit design.

3.    The method recited in claim 2, wherein the analyzing (320) further comprises:

   generating the second output signatures using a forward propagation process traversing the second circuit design from inputs (primary inputs, scan cells, or both) (P1, P2, P3, P4) to outputs (primary outputs, scan cells, or both) (O1, O2); and
   generating the second input signatures using a backward propagation process traversing the second circuit design from the outputs (O1, O2) to the inputs (P1, P2, P3, P4).

4. The method recited in claim 3, wherein the generating the second output signatures comprises:

   assigning one or more prime numbers to the inputs (P1, P2, P3, P4); and
   assigning prime numbers, predefined output signature computation equations, and predefined input signature computation equations to devices in the second circuit design.

5. The method recited in claim 2, wherein the first input signatures are derived based on propagating the first output signatures from outputs (primary outputs, scan cells, or both) (O1, O2) of the first circuit design to inputs (primary inputs, scan cells, or both) (P1, P2, P3, P4) of the first circuit design according to circuit structure of the first circuit design, and wherein the second input signatures are derived based on propagating the second output signatures from outputs (primary outputs, scan cells, or both) (O1, O2) of the second circuit design to inputs (primary inputs, scan cells, or both) (P1, P2, P3, P4) of the second circuit design according to circuit structure of the second circuit design.

6. The method recited in claim 2, wherein the first output signatures and the first input signatures are stored with each of the first output signatures being associated with corresponding first input signatures in the first input signatures, and wherein the second output signatures and the second input signatures are stored with each of the second output signatures being associated with corresponding second input signatures in the second input signatures.

7. The method recited in claim 1, wherein the modifying (330) further comprises assigning random values to rest of bits of the second set of test patterns.

8. One or more non-transitory computer-readable media storing computer-executable instructions for causing one or more processors to perform a method according to claim 1.

9. The one or more non-transitory computer-readable media recited in claim 8,
   wherein the method further comprises:
   comparing first output signatures and first input signatures for the first circuit design with second output signatures and second input signatures for the second circuit design.

10. The one or more non-transitory computer-readable media recited in claim 9,
    wherein the analyzing (320) further comprises:

    generating the second output signatures using a forward propagation process traversing the second circuit design from inputs (primary inputs, scan cells, or both) (P1, P2, P3, P4) to outputs (primary outputs, scan cells, or both) (O1, O2); and
    generating the second input signatures using a backward propagation process traversing the second circuit design from the outputs (O1, O2) to the inputs (P1, P2, P3, P4).

11. The one or more non-transitory computer-readable media recited in claim 10,
    wherein the generating the second output signatures comprises:

    assigning one or more prime numbers to the inputs (P1, P2, P3, P4); and
    assigning prime numbers, predefined output signature computation equations, and predefined input signature computation equations to devices in the second circuit design.

12. The one or more non-transitory computer-readable media recited in claim 9,
    wherein the first input signatures are derived based on propagating the first output signatures from outputs (primary outputs, scan cells, or both) (O1, O2) of the first circuit design to inputs (primary inputs, scan cells, or both) (P1, P2, P3, P4) of the first circuit design according to circuit structure of the first circuit design, and wherein the second input signatures are derived based on propagating the second output signatures from outputs (primary outputs, scan cells, or both) (O1, O2) of the second circuit design to inputs (primary inputs, scan cells, or both) (P1, P2, P3, P4) of the second circuit design according to circuit structure of the second circuit design.

13. The one or more non-transitory computer-readable media recited in claim 9,
    wherein the first output signatures and the first input signatures are stored with each of the first output signatures being associated with corresponding first input signatures in the first input signatures, and wherein the second output signatures and the second input signatures are stored with each of the second output signatures being associated with corresponding second input signatures in the second input signatures.

**14.** The one or more non-transitory computer-readable media recited in claim 8,
wherein the modifying (330) further comprises assigning random values to rest of bits of the second set of test patterns.

**15.** A system, comprising:
one or more processors (105), the one or more processors programmed to perform a method according to any of claims 1 to 7.

**Patentansprüche**

**1.** Verfahren, ausgeführt durch mindestens einen Prozessor (105) eines Computers (101), das Folgendes umfasst:
Empfangen (310) eines ersten Satzes von Testmustern, die für einen ersten Schaltungsentwurf erzeugt werden, eines zweiten Schaltungsentwurfs und eines Satzes von Fehlern, die zur Testmustererzeugung für den zweiten Schaltungsentwurf verwendet werden sollen;

Analysieren (320) des ersten Schaltungsentwurfs und des zweiten Schaltungsentwurfs, um einen Teil des zweiten Schaltungsentwurfs strukturell ähnlich einem Teil des ersten Schaltungsentwurfs zu bestimmen;
wobei das Verfahren durch Folgendes gekennzeichnet ist:

Modifizieren (330) des ersten Satzes von Testmustern, um einen zweiten Satz von Testmustern für den zweiten Schaltungsentwurf zu erzeugen, wobei das Modifizieren das Wiederverwenden von Werten von Bits in dem ersten Satz von Testmustern, die mit dem Teil des ersten Schaltungsentwurfs assoziiert sind, als Werte von Bits in dem zweiten Satz von Testmustern, die mit dem Teil des zweiten Schaltungsentwurfs assoziiert sind, umfasst;
Durchführen einer Fehlersimulation (340) an dem zweiten Schaltungsentwurf unter Verwendung des zweiten Satzes von Testmustern und des Satzes von Fehlern, um eine Teilmenge von Fehlern in dem Satz von Fehlern zu bestimmen, die nicht durch den zweiten Satz von Testmustern detektiert werden können;
Durchführen einer Testmustererzeugung (350) für die Teilmenge von Fehlern, um einen dritten Satz von Testmustern für den zweiten Schaltungsentwurf zu erzeugen; und
Speichern (360) des zweiten Satzes von Testmustern und des dritten Satzes von Testmustern in einem nichtflüchtigen computerlesbaren Medium.

**2.** Verfahren nach Anspruch 1, wobei das Analysieren (320) Folgendes umfasst: Vergleichen erster Ausgabesignaturen und erster Eingabesignaturen für den ersten Schaltungsentwurf mit zweiten Ausgabesignaturen und zweiten Eingabesignaturen für den zweiten Schaltungsentwurf.

**3.** Verfahren nach Anspruch 2, wobei das Analysieren (320) ferner Folgendes umfasst:

Erzeugen der zweiten Ausgabesignaturen unter Verwendung eines Vorwärtsausbreitungsprozesses, der den zweiten Schaltungsentwurf von Eingängen (Primäreingängen, Abtastzellen oder beiden) durchquert (P1, P2, P3, P4) an Ausgängen (Primärausgängen, Abtastzellen oder beiden) (O1, O2); und
Erzeugen der zweiten Eingangssignaturen unter Verwendung eines Rückwärtsausbreitungsprozesses, der den zweiten Schaltungsentwurf von den Ausgängen (O1, O2) zu den Eingängen (P1, P2, P3, P4) durchläuft.

**4.** Verfahren nach Anspruch 3, wobei das Erzeugen der zweiten Ausgabesignaturen Folgendes umfasst:

Zuweisen einer oder mehrerer Primzahlen zu den Eingängen (P1, P2, P3, P4); und
Zuweisen von Primzahlen, vordefinierten Ausgabesignaturberechnungsgleichungen und vordefinierten Eingabesignaturberechnungsgleichungen zu Vorrichtungen in dem zweiten Schaltungsentwurf.

**5.** Verfahren nach Anspruch 2, wobei die ersten Eingangssignaturen basierend auf dem Ausbreiten der ersten Ausgangssignaturen von Ausgängen (Primärausgängen, Abtastzellen oder beiden) (O1, O2) des ersten Schaltungsentwurfs zu Eingängen (Primäreingängen, Abtastzellen oder beiden) (P1, P2, P3, P4) des ersten Schaltungsentwurfs gemäß der Schaltungsstruktur des ersten Schaltungsentwurfs abgeleitet sind, und wobei die zweiten Eingangssignaturen basierend auf dem Ausbreiten der zweiten Ausgangssignaturen von Ausgängen (Primärausgängen, Abtastzellen oder beiden) (O1, O2) des zweiten Schaltungsentwurfs zu Eingängen (Primäreingängen, Abtastzellen oder beiden) (P1, P2, P3, P4) des zweiten Schaltungsentwurfs gemäß der Schaltungsstruktur des zweiten Schaltungsentwurfs abgeleitet sind.

6. Verfahren nach Anspruch 2, wobei die ersten Ausgabesignaturen und die ersten Eingabesignaturen gespeichert werden, wobei jede der ersten Ausgabesignaturen mit entsprechenden ersten Eingabesignaturen in den ersten Eingabesignaturen assoziiert ist, und wobei die zweiten Ausgabesignaturen und die zweiten Eingabesignaturen gespeichert werden, wobei jede der zweiten Ausgabesignaturen mit entsprechenden zweiten Eingabesignaturen in den zweiten Eingabesignaturen assoziiert ist.

7. Verfahren nach Anspruch 1, wobei das Modifizieren (330) ferner das Zuweisen von Zufallswerten zu den restlichen Bits des zweiten Satzes von Testmustern umfasst.

8. Ein oder mehrere nichtflüchtige computerlesbare Medien, die computerausführbare Anweisungen speichern, um zu bewirken, dass ein oder mehrere Prozessoren ein Verfahren nach Anspruch 1 durchführen.

9. Ein oder mehrere nichtflüchtige computerlesbare Medien nach Anspruch 8, wobei das Verfahren ferner Folgendes umfasst:
Vergleichen erster Ausgabesignaturen und erster Eingabesignaturen für den ersten Schaltungsentwurf mit zweiten Ausgabesignaturen und zweiten Eingabesignaturen für den zweiten Schaltungsentwurf.

10. Ein oder mehrere nichtflüchtige computerlesbare Medien nach Anspruch 9, wobei das Analysieren (320) ferner Folgendes umfasst:

Erzeugen der zweiten Ausgabesignaturen unter Verwendung eines Vorwärtsausbreitungsprozesses, der den zweiten Schaltungsentwurf von Eingängen (Primäreingängen, Abtastzellen oder beiden) durchquert (P1, P2, P3, P4) an Ausgängen (Primärausgängen, Abtastzellen oder beiden) (O1, O2); und
Erzeugen der zweiten Eingangssignaturen unter Verwendung eines Rückwärtsausbreitungsprozesses, der den zweiten Schaltungsentwurf von den Ausgängen (O1, O2) zu den Eingängen (P1, P2, P3, P4) durchläuft.

11. Ein oder mehrere nichtflüchtige computerlesbare Medien nach Anspruch 10, wobei das Erzeugen der zweiten Ausgabesignaturen Folgendes umfasst:

Zuweisen einer oder mehrerer Primzahlen zu den Eingängen (P1, P2, P3, P4); und
Zuweisen von Primzahlen, vordefinierten Ausgabesignaturberechnungsgleichungen und vordefinierten Eingabesignaturberechnungsgleichungen zu Vorrichtungen in dem zweiten Schaltungsentwurf.

12. Nichtflüchtiges computerlesbares Medium oder mehrere nichtflüchtige computerlesbare Medien nach Anspruch 9, wobei die ersten Eingabesignaturen basierend auf dem Ausbreiten der ersten Ausgabesignaturen von Ausgängen (Primärausgängen, Abtastzellen oder beiden) (O1, O2) des ersten Schaltungsentwurfs zu Eingängen (Primäreingängen, Abtastzellen oder beiden) (P1, P2, P3, P4) des ersten Schaltungsentwurfs gemäß der Schaltungsstruktur des ersten Schaltungsentwurfs abgeleitet sind, und wobei die zweiten Eingabesignaturen basierend auf dem Ausbreiten der zweiten Ausgabesignaturen von Ausgängen (Primärausgängen, Abtastzellen oder beiden) (O1, O2) des zweiten Schaltungsentwurfs zu Eingängen (Primäreingängen, Abtastzellen oder beiden) (P1, P2, P3, P4) des zweiten Schaltungsentwurfs gemäß der Schaltungsstruktur des zweiten Schaltungsentwurfs abgeleitet sind.

13. Ein oder mehrere nichtflüchtige computerlesbare Medien nach Anspruch 9, wobei die ersten Ausgabesignaturen und die ersten Eingabesignaturen gespeichert werden, wobei jede der ersten Ausgabesignaturen mit entsprechenden ersten Eingabesignaturen in den ersten Eingabesignaturen assoziiert ist, und wobei die zweiten Ausgabesignaturen und die zweiten Eingabesignaturen gespeichert werden, wobei jede der zweiten Ausgabesignaturen mit entsprechenden zweiten Eingabesignaturen in den zweiten Eingabesignaturen assoziiert ist.

14. Ein oder mehrere nichtflüchtige computerlesbare Medien nach Anspruch 8, wobei das Modifizieren (330) ferner das Zuweisen von Zufallswerten zu restlichen Bits des zweiten Satzes von Testmustern umfasst.

15. System, das Folgendes umfasst:
Ein oder mehrere Prozessoren (105), wobei der eine oder die mehreren Prozessoren dazu programmiert sind, ein Verfahren nach einem der Ansprüche 1 bis 7 durchzuführen.

**Revendications**

1. Procédé, exécuté par au moins un processeur (105) d'un ordinateur (101), comportant les étapes consistant à : recevoir (310) un premier ensemble de motifs de test généré pour une première conception de circuit, une deuxième conception de circuit, et un ensemble de pannes à utiliser pour la génération de motifs de test pour la deuxième conception de circuit ;

   analyser (320) la première conception de circuit et la deuxième conception de circuit pour déterminer une partie de la deuxième conception de circuit structurellement similaire à une partie de la première conception de circuit ; le procédé étant **caractérisé par** les étapes consistant à
   modifier (330) le premier ensemble de motifs de test pour générer un deuxième ensemble de motifs de test pour la deuxième conception de circuit, la modification comportant la réutilisation de valeurs de bits dans le premier ensemble de motifs de test associés à la partie de la première conception de circuit en tant que valeurs de bits dans le deuxième ensemble de motifs de test associés à la partie de la deuxième conception de circuit ;
   effectuer une simulation de pannes (340) sur la deuxième conception de circuit en utilisant le deuxième ensemble de motifs de test et l'ensemble de pannes pour déterminer un sous-ensemble de pannes dans l'ensemble de pannes qui ne peuvent pas être détectées par le deuxième ensemble de motifs de test ;
   effectuer une génération de motifs de test (350) pour le sous-ensemble de pannes afin de générer un troisième ensemble de motifs de test pour la deuxième conception de circuit ; et
   stocker (360) le deuxième ensemble de motifs de test et le troisième ensemble de motifs de test dans un support non transitoire lisible par ordinateur.

2. Procédé selon la revendication 1, l'analyse (320) comportant : la comparaison de premières signatures de sortie et de premières signatures d'entrée pour la première conception de circuit avec des deuxièmes signatures de sortie et des deuxièmes signatures d'entrée pour la deuxième conception de circuit.

3. Procédé selon la revendication 2, l'analyse (320) comportant en outre :

   la génération des deuxièmes signatures de sortie à l'aide d'un processus de propagation directe parcourant la deuxième conception de circuit depuis des entrées (entrées primaires, cellules de balayage, ou les deux) (P1, P2, P3, P4) jusqu'à des sorties (sorties primaires, cellules de balayage, ou les deux) (O1, O2) ; et
   la génération des deuxièmes signatures d'entrée à l'aide d'un processus de rétropropagation parcourant la deuxième conception de circuit des sorties (O1, O2) aux entrées (P1, P2, P3, P4).

4. Procédé selon la revendication 3, la génération des deuxièmes signatures de sortie comportant :

   l'affectation d'un ou de plusieurs nombres premiers aux entrées (P1, P2, P3, P4) ; et
   l'affectation de nombres premiers, d'équations prédéfinies de calcul de signatures de sortie, et d'équations prédéfinies de calcul de signatures d'entrée à des dispositifs dans la deuxième conception de circuit.

5. Procédé selon la revendication 2, les premières signatures d'entrée étant élaborées sur la base de la propagation des premières signatures de sortie depuis des sorties (sorties primaires, cellules de balayage, ou les deux) (O1, O2) de la première conception de circuit jusqu'à des entrées (entrées primaires, cellules de balayage, ou les deux) (P1, P2, P3, P4) de la première conception de circuit selon une structure de circuits de la première conception de circuit, et les deuxièmes signatures d'entrée étant élaborées sur la base de la propagation des deuxièmes signatures de sortie depuis des sorties (sorties primaires, cellules de balayage, ou les deux) (O1, O2) de la deuxième conception de circuit jusqu'à des entrées (entrées primaires, cellules de balayage, ou les deux) (P1, P2, P3, P4) de la deuxième conception de circuit selon une structure de circuits de la deuxième conception de circuit.

6. Procédé selon la revendication 2, les premières signatures de sortie et les premières signatures d'entrée étant stockées en associant chacune des premières signatures de sortie à des premières signatures d'entrée correspondantes parmi les premières signatures d'entrée, et les deuxièmes signatures de sortie et les deuxièmes signatures d'entrée étant stockées en associant chacune des deuxièmes signatures de sortie à des deuxièmes signatures d'entrée correspondantes parmi les deuxièmes signatures d'entrée.

7. Procédé selon la revendication 1, la modification (330) comportant en outre l'affectation de valeurs aléatoires au reste des bits du deuxième ensemble de motifs de test.

8.  Un ou plusieurs supports non transitoires lisibles par ordinateur conservant des instructions exécutables par ordinateur destinées à amener un ou plusieurs processeurs à réaliser un procédé selon la revendication 1.

9.  Le ou les supports non transitoires lisibles par ordinateur selon la revendication 8, le procédé comportant en outre : la comparaison de premières signatures de sortie et de premières signatures d'entrée pour la première conception de circuit avec des deuxièmes signatures de sortie et des deuxièmes signatures d'entrée pour la deuxième conception de circuit.

10. Le ou les supports non transitoires lisibles par ordinateur selon la revendication 9, l'analyse (320) comportant en outre :

    la génération des deuxièmes signatures de sortie à l'aide d'un processus de propagation directe parcourant la deuxième conception de circuit depuis des entrées (entrées primaires, cellules de balayage, ou les deux) (P1, P2, P3, P4) jusqu'à des sorties (sorties primaires, cellules de balayage, ou les deux) (O1, O2) ; et
    la génération des deuxièmes signatures d'entrée à l'aide d'un processus de rétropropagation parcourant la deuxième conception de circuit des sorties (O1, O2) aux entrées (P1, P2, P3, P4).

11. Le ou les supports non transitoires lisibles par ordinateur selon la revendication 10, la génération des deuxièmes signatures de sortie comportant :

    l'affectation d'un ou de plusieurs nombres premiers aux entrées (P1, P2, P3, P4) ; et
    l'affectation de nombres premiers, d'équations prédéfinies de calcul de signatures de sortie, et d'équations prédéfinies de calcul de signatures d'entrée à des dispositifs dans la deuxième conception de circuit.

12. Le ou les supports non transitoires lisibles par ordinateur selon la revendication 9, les premières signatures d'entrée étant élaborées sur la base de la propagation des premières signatures de sortie depuis des sorties (sorties primaires, cellules de balayage, ou les deux) (O1, O2) de la première conception de circuit jusqu'à des entrées (entrées primaires, cellules de balayage, ou les deux) (P1, P2, P3, P4) de la première conception de circuit selon une structure de circuits de la première conception de circuit, et les deuxièmes signatures d'entrée étant élaborées sur la base de la propagation des deuxièmes signatures de sortie depuis des sorties (sorties primaires, cellules de balayage, ou les deux) (O1, O2) de la deuxième conception de circuit jusqu'à des entrées (entrées primaires, cellules de balayage, ou les deux) (P1, P2, P3, P4) de la deuxième conception de circuit selon une structure de circuits de la deuxième conception de circuit.

13. Le ou les supports non transitoires lisibles par ordinateur selon la revendication 9, les premières signatures de sortie et les premières signatures d'entrée étant stockées en associant chacune des premières signatures de sortie à des premières signatures d'entrée correspondantes parmi les premières signatures d'entrée, et les deuxièmes signatures de sortie et les deuxièmes signatures d'entrée étant stockées en associant chacune des deuxièmes signatures de sortie à des deuxièmes signatures d'entrée correspondantes parmi les deuxièmes signatures d'entrée.

14. Le ou les supports non transitoires lisibles par ordinateur selon la revendication 8, la modification (330) comportant en outre l'affectation de valeurs aléatoires au reste des bits du deuxième ensemble de motifs de test.

15. Système, comportant :
    un ou plusieurs processeurs (105), le ou les processeurs étant programmés pour réaliser un procédé selon l'une quelconque des revendications 1 à 7.

**FIG. 1**

EP 4 305 541 B1

FAST TEST PATTERN GENERATION TOOL 200

STRUCTURE SIMILARITY ANALYSIS UNIT 210

TEST PATTERN MODIFICATION UNIT 220

FAULT SIMULATION UNIT 230

TEST PATTERN GENERATION  UNIT 240

Input database
205

Output database
255

**FIG. 2**

310: Receiving a first circuit design, a second circuit design, a first set of test patterns generated for the first circuit design, and a set of faults to be used for test pattern generation for the second circuit design

320: Analyzing the first circuit design and the second circuit design to determine part of the second circuit design structurally similar to part of the first circuit design

330: Modifying the first set of test patterns to generate a second set of test patterns for the second circuit design

340: Performing fault simulation on the second circuit design using the second set of test patterns and the set of faults to determine a subset of faults in the set of faults that cannot be detected by the second set of test patterns

350: Performing test pattern generation for the subset of faults to generate a third set of test patterns for the second circuit design

360: Storing the second set of test patterns and the third set of test patterns in a non-transitory computer-readable media

Flow chart 300

FIG. 3

| | Gate Types | Prime Number(Mask) |
|---|---|---|
| 1 | AND, NAND | 1,034,653 |
| 2 | WIRE, BUS | 2,572,261 |
| 3 | OR, NOR | 4,980,727 |
| 4 | XOR, XNOR | 5,210,099 |
| 5 | BUFFER, INVERTER | 9,137,657 |

**FIG. 4**

FIG. 5

FIG. 6

FIG. 7

Circuit 700

| | Size | Tot Cones in Baseline Circuit | Diff Cones in Mod Circuit | Run Time (seconds) | | | Test Patterns | | | Fault Coverage(%) | |
|---|---|---|---|---|---|---|---|---|---|---|---|
| | | | | Baseline Circuit | Modified Circuit | Gain (ratio) | Baseline Circuit | Modified Circuit | Increase (%) | Baseline Circuit | Modified Circuit |
| 1 | 8,611,749 | 429,708 | 1,562 | 7,020 | 508 | 13.82 | 2,334 | 2,861 | 22.58 | 97.06 | 97.06 |
| 2 | 3,435,493 | 276,462 | 377 | 622 | 99 | 6.3 | 1,459 | 1,565 | 7.27 | 92.9 | 92.91 |
| 3 | 4,833,052 | 334,108 | 9,486 | 1,568 | 125 | 12.54 | 1,408 | 1,515 | 7.6 | 92.08 | 92.08 |
| 4 | 10,213,281 | 601,469 | 30,380 | 9,300 | 1,294 | 6.91 | 7,424 | 8,378 | 12.85 | 90.85 | 90.88 |
| 5 | 15,102,044 | 1,215,337 | 8,380 | 13,740 | 1,207 | 11.38 | 4,544 | 5,271 | 16 | 94.46 | 94.47 |
| 6 | 3,048,599 | 174,505 | 3,751 | 1,260 | 133 | 9.47 | 2,944 | 3,210 | 9.04 | 91.92 | 91.92 |
| 7 | 3,519,135 | 219,280 | 7,003 | 5,103 | 414 | 12.33 | 5,155 | 5,900 | 14.45 | 97.02 | 97.03 |
| 8 | 1,203,568 | 45,345 | 2,361 | 484 | 28 | 17.29 | 1,811 | 2,091 | 15.46 | 88.58 | 88.58 |
| 9 | 1,699,509 | 89,908 | 11,097 | 10,168 | 469 | 21.68 | 2,163 | 3,017 | 39.48 | 97.62 | 97.87 |
| 10 | 6,389,260 | 302,540 | 7,317 | 1,777 | 256 | 7.05 | 2,520 | 4,141 | 7.86 | 90.83 | 90.86 |
| 11 | 12,167,308 | 440,540 | 24,063 | 6,446 | 882 | 7.31 | 7,168 | 7,355 | 2.61 | 91.65 | 91.9 |

Table 800

**FIG. 8**

| | Size | Tot Cones Baseline Circuit | Diff Cones in Mod Circuit | # of Scan Cell Increase | Run Time(seconds) | | | Test Patterns | | | Fault coverage(%) | |
|---|---|---|---|---|---|---|---|---|---|---|---|---|
| | | | | | Baseline Circuit | Modified Circuit | Gain ratio | Baseline Circuit | Modified Circuit | Increase (%) | Baseline Circuit | Modified circuit |
| 1 | 8,611,749 | 429,708 | 715 | 7.6 | 7,020 | 623 | 11 | 2,334 | 2722 | 16.60 | 97.06 | 97.06 |
| 2 | 3,435,493 | 276,462 | 14 | 7.6 | 622 | 71 | 9 | 1,459 | 1471 | 0.85 | 92.9 | 92.91 |
| 3 | 4,833,052 | 334,108 | 29 | 8.8 | 1,568 | 133 | 12 | 1,408 | 1654 | 17.5 | 92.08 | 92.08 |
| 4 | 10,213,281 | 601,469 | 224 | 7.3 | 9,300 | 788 | 9 | 7,424 | 7484 | 0.81 | 90.85 | 90.85 |
| 5 | 15,102,044 | 1,215,337 | 408 | 8.3 | 13,740 | 928 | 15 | 4,544 | 4,825 | 6.18 | 94.46 | 94.47 |
| 6 | 3,048,599 | 174,505 | 329 | 6.1 | 1,260 | 125 | 10 | 2,944 | 3,035 | 3.07 | 91.92 | 91.92 |
| 7 | 3,519,135 | 219,280 | 2,164 | 6.2 | 5,103 | 324 | 16 | 5,155 | 5,155 | 13.08 | 97.02 | 97.03 |
| 8 | 1,203,568 | 45,345 | 3,329 | 6.6 | 484 | 46 | 11 | 1,811 | 1,811 | 30.72 | 88.58 | 88.58 |
| 9 | 1,699,509 | 89,908 | 1,240 | 7.2 | 10,168 | 342 | 30 | 2,163 | 2,597 | 20.06 | 97.62 | 97.87 |
| 10 | 6,389,260 | 302,540 | 622 | 5.7 | 1,777 | 246 | 7 | 2,520 | 2,671 | 6.01 | 90.83 | 90.86 |
| 11 | 12,167,308 | 440,540 | 20,981 | 7.9 | 6,446 | 879 | 7 | 7,168 | 7356 | 2.62 | 91.65 | 91.74 |

Table 900

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SANG-HOON SONG** ; **L. L. KINNEY**. Incremental test pattern generation. *Digest of Papers Eleventh Annual 1993 IEEE VLSI Test Symposium*, 1993, 244-250

- **A. DUTTA** ; **N. TUTTLE** ; **K. ANANDH**. Canonical ordering of instances to immunize the FPGA place and route flow from ECO-induced variance. *International Symposium on Quality Electronic Design (ISQED)*, 2013, 359-363
- **XIAOKE QIN**. *Efficient directed test generation for validation of multicore architectures*